# EUROPEAN PATENT SPECIFICATION

(11) **EP 2 334 108 B1**
(45) Date of publication and mention of the grant of the patent: **06.01.2016**
(21) Application number: 09814035.3
(22) Date of filing: 09.09.2009
(51) Int. Cl.: H04M 15/00, H04W 4/24

(54) **METHOD FOR PREVENTING LOSS OF CALLING BILLS DUE TO SWITCHING OF SERVICE CONTROL PROCESSORS**
VERFAHREN ZUR VERHINDERUNG DES VERLUSTS VON ANRUFABRECHNUNGEN AUFGRUND DES WECHSELS VON DIENSTSTEUERUNGSPROZESSOREN
PROCÉDÉ EMPÊCHANT LA PERTE DE FACTURES D APPEL DUE À LA COMMUTATION DE PROCESSEURS DE CONTRÔLE DE SERVICE

(30) Priority: 18.09.2008 CN 200810216192
(43) Date of publication of application: 15.06.2011
(73) Proprietor: ZTE Corporation, Shenzhen, Guangdong 518057 (CN)
(72) Inventor: WEI, Xuesong, Shenzhen Guangdong 518057 (CN); ZHOU, Zhijun, Shenzhen Guangdong 518057 (CN)
(74) Representative: Ilgart, Jean-Christophe
(86) International application number: PCT/CN2009/073848
(87) International publication number: WO 2010/031315

(56) References cited:
- CN-A- 1 581 750
- CN-A- 1 852 144
- CN-A- 1 870 506
- US-A- 5 890 156
- US-A1- 2012 059 749

## Description

### Filed of the Invention

The present invention relates to the field of voice calling service of intelligent network in telecommunication industry, in particular to a method for preventing the loss of phone bills due to the switching of a service control processor.

### Background of the Invention

At present, more and more operators are partly or entirely using an Online Counter System (OCS) which is a counter system adopted in the voice calling service of intelligent network. The intelligent network is a system structure for generating and providing a plurality of services, which can provide various distinctive value-added services quickly, conveniently, flexibly and economically. The OCS in the intelligent network service realizes the separation of service control and charging, and is the main direction of developing the charging in the future.

In the intelligent network system, a Service Control Point (SCP) is a core network element, and mainly comprises a service Control Processor (CP), a Data Base (DB) and a Signal Interface Unit (SIU), wherein CP is mainly responsible for the control and running of the service based on logic. In view of the importance of the CP, the solution of dual backup is generally adopted. In this way, when a host CP is abnormal, e.g. in the case of server down, the host computer will be switched quickly to a standby computer (namely a standby CP) to run, and the subsequent reported service session can also continue running on the standby computer. In this way, when the host CP is abnormal, the breakdown of the whole service system can be avoided, and the economic loss caused to the operators can be reduced.

An example of related prior art is document CN1581750, which discloses a method for treating message loss between CDMA intelligent calls.

Nowadays, the solution of dual backup of the CP has been widely used in current network already. Adopting the solution of quickly switching the abnormal host computer onto the standby computer can ensure the continuous running of subsequent services. However, the sessions on the host CP is lost all the same during switching of the host computer and the standby computer, in particular to the voice calling service which requires real-time charging. Just because the session is lost, the CP will lose the control to the charging of the talks, and will lose the phone bills at the same time. Thus, the talks of the users can not be charged any more, with the result that certain economic loss is caused to the operators.

Therefore, the prior art is still remained to be improved and developed.

### Summery of the Present Invention

Considering the problem in prior art that the phone bill is lost due to the switching of the service control processors (CPs) in voice calling service, thus one object of the present invention is to provide a method for preventing the loss of phone bills due to the switching of the service control processor, which can ensure to reduce the economic loss caused to the operators due to the switching of the CPs to a great extent, and can protect the benefit of the operators to the utmost extent.

The method for preventing the loss of phone bills due to the switching of the service control processor according to the present invention comprises the following steps:
A, generating a zero-time phone bill before a talk between two calling parties is initiated, and generating a talk time phone bill when a user ends the talk;
B, switching the service controllers under the circumstance that the communication is abnormal, scanning all generated phone bills, and sorting out the zero-time phone bills which have lost the talk time phone bills; and
C, modifying the sorted zero-time phone bills to compensate the talk time phone bills which generate the loss.

In the method, wherein the step A specifically comprises:
A1, the generated zero-time phone bill and the talk time phone bill having the same content, while having different talk ending time, talk time and service keys; and
A2, the talk ending time and talk starting time of the zero-time phone bill being both answering time, and the talk time being zero-time.

The above method also comprises the following steps after the step A2:
A3, generating an emergency phone bill which has the same content with but different service keys from the talk time phone bill under the circumstance that the communication is abnormal; and
A4, the talk starting time of the emergency phone bill being practical talk starting time, and the talk ending time of the emergency phone bill being practical talk ending time.

In the method, wherein the step B also comprises:
controlling switching time of the service controllers within an error range of the talk ending time which is out of control, and controlling scanning time for scanning the phone bills before sorting within a setting time range.

In the method, wherein the step B specifically comprises:
B11, comparing the scanned talk time phone bills with the zero-time phone bill, which is used as the basis for the comparison, generated before the talk; and
B12, judging whether the contents of calling number, called number and the starting time are respectively the same or not; wherein if same, a complete phone bill is considered to have been generated; otherwise, the talk time phone bill corresponding to the zero-time phone bill is considered to have been lost.

In the method, wherein the step C specifically comprises:
C11, modifying the service key in file name of the zero-time phone bill into service key in a phone bill of a special service key;
C12, modifying the service key in content items of the zero-time phone bill into the special service key; and
C13, modifying the ending time of the zero-time phone bill into the switching time of the service controllers, and modifying the talk time of the zero-time phone bill correspondingly.

In the method, wherein the step B specifically comprises:
B21, comparing the scanned emergency phone bills with the zero-time phone bill, which is used as the basis for the comparison, generated before the talk;
B22, judging whether the three contents of calling number, called number and the starting time are respectively the same or not; wherein if same, a complete phone bill is considered to have been generated; otherwise, the emergency phone bill corresponding to the zero-time phone bill is considered to have been lost; and
B23, sorting out the zero-time phone bills which have lost the emergency phone bill.

In the method, wherein the step C also comprises:
modifying the sorted zero-time phone bills to compensate the emergency phone bills which generate the loss.

In the method, wherein the step C specifically comprises:
C21, modifying the service key in file name of the zero-time phone bill into the service key in the emergency phone bill;
C22, modifying the service key in content items of the zero-time phone bill into an service key of the emergency phone bill; and
C23, modifying the ending time of the zero-time phone bill into the switching time of the service controllers, and modifying the talk time of the zero-time phone bill correspondingly.

In the method, wherein the method also comprises the following steps after the step C:
D1, storing the modified zero-time phone bills in a designated folder as compensation phone bills; and
D2, providing the compensation phone bills to an online counter system for gathering and completing charging to the user.

The present invention provides a method for preventing the loss of phone bills due to the switching of the service control processor, adopts the measures of modifying the zero-time phone bills or the emergency phone bills which have lost the talk time phone bill, compensates practical talk time phone bill for the OCS to gather and charge, can prevent the phone bills of ongoing talks from losing when the CPs are switched, can still provide effective guarantee for the normal charging to the user on calling under the circumstance that the CP is abnormal, prevents the charging of all ongoing calls from losing control due to the switching of the CPs, realizes the normal charging to the user, consequently reduces the loss of the operators effectively, and protects the benefit of the operators to the utmost extent.

### Brief Description of the Drawings

The drawings in the specification provide a further understanding to the present invention and constitute a part of the application. The exemplary embodiments of the present invention and the explanation thereof are given thereafter by way of illustration only, and thus are not limitative of the present invention, and wherein:
Fig.1 is a structural schematic diagram of the SCP according to the embodiment of the present invention;
Fig.2 is a schematic diagram of the normal flow of PPS prepaid service according to the embodiment of the present invention;
Fig.3 is a schematic diagram of the abnormal flow of PPS prepaid service according to the embodiment of the present invention;
Fig.4 is a schematic diagram of the generation flow of CP switching phone bill according to the embodiment of the present invention; and
Fig. 5 is a schematic diagram of the format and content of PPS prepaid phone bill according to the embodiment of the present invention.

### Detailed Description

The detailed description and embodiments for preventing the loss of phone bills due to the switching of the service control processor will be described in detail hereinafter in connection with the drawings.

The method for preventing the loss of phone bills due to the switching of the service control processor provided by the embodiments of the present invention comprises the main core point of compensating the talk timing phone bill which generate the lost due to the switching of service controllers, so as to realize the normal charge of the existing calls under abnormal circumstances. That is to say, when the service controllers in the intelligent network are switched, according to the situations of the phone bill generated before the talk and the phone bill generated after the talk in the service, the two phone bills within setting time period are analyzed, compared and modified after the switching. In this way, the practical phone bill record of ongoing talks which are lost due to the abnormity of the service controller is generated, the talk timing phone bill is completed, and then the normal charging to existing calls can be realized even if the service controller is abnormal, consequently the economic loss of the operators due to the abnormity of the CP is reduced to a great extent, and the economic benefit of the operators can be protected effectively. As for the server down, CP switching, and OCS system and so on, the technologies are well-known for those skilled in the art, so unnecessary details will not be given here any more.

The phone bill compensation control method adopted in the detailed description of the present invention is as follows. The lost phone bills of the talking parties occurred during the switching CPs are generated approximately according to existing phone bills after the CPs are switched. The OCS gathers the phone bills to realize the charging to the users. While the CPs are switched, the host CP will lose service control to all the services running on the host CP, including the ongoing talks.

While at this time, the SIU does not release the sessions on calling. That is to say, the two calling parties can still communicate with each other. Till the standby CP switched is started, SIU will re-establish connection with the standby CP, the original session will be terminated, and all calls before are over. Because the sessions on the host CP can not be transplanted to the standby CP, neither the host CP nor the standby CP can complete to charge the sessions or record the phone bill of the sessions.

In order to prevent the complete loss of the phone bill in this case, the embodiment of the present invention plans to adopt the following method to achieve the purpose, and the phone bills will be compensated in two steps.

Firstly, the calls are identified, which are not over normally and do not complete final charging or record phone bill when the CPs are switched. In order to achieve the purpose, the prepaid service (PPS) needs to simulate the phone bill of the two talking parties after the MSC reports the answering events of the calling user and called user. The content of the phone bill is basically the same with the complete phone bill after the talk is over, only the parameters of the ending time and talk time are different from the phone bill after the call is over. The talk ending time and talk starting time of the phone bill are both the answering time, and the talk time is zero. The phone bill is called as zero-time phone bill of type A before the call. After the talk is over, normal phone bill will generate certainly. The talk ending time at this time is the formal ending time, and the phone bill at this time is complete phone bill after the call which is called as phone bill of type B after normal call is over. That is to say, each complete call will generate a zero-time phone bill A before the talk and a complete-time phone bill B after the call. In this way, when the CPs are switched, the two calling parties performing a normal talk will lose the phone bill B. According to existing phone bills, the phone bills which only have phone bill A but do not have corresponding phone bill B can be determined. The complete phone bill B is not generated because of the abnormal situations of CP switching and so on. The users are not charged correctly, so phone bill B is needed to generate.

Secondly, the lost phone bills B are compensated. After the CPs are switched, the time when the switching occurs can be basically determined according to the record of a log. All phone bills are scanned according to the switching time. All phone bills within the time range from n hours before the CPs switched to the switching time are scanned. All the calls with phone bill of type A without phone bill of type B are sorted out. Then the phone bill of type B is compensated and generated with reference to the phone bill of type A. The ending time of the phone bill of type B is the switching time, and the talk time in phone bill B is the difference value that the CP switching time t3 minus the start answering time t0 in phone bill A, wherein the switching time t3 in phone bill B can be fine-adjusted or processed in other ways as a parameter as required.

Take a certain mobile company in Asia as an example, the mobile company adopts the OCS to realize PPS. But the method provided by the embodiment of the present invention can also used in traditional intelligent network service.

The whole realization process will be described hereafter in connection with the drawings by dividing into a plurality of parts.

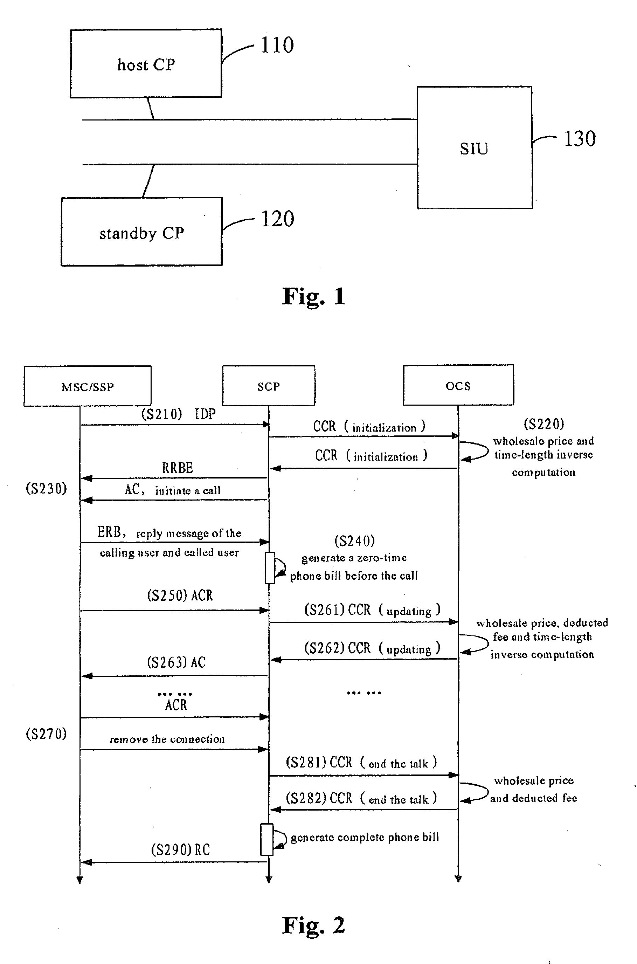

As shown in Fig.1, in the SCP structure with dual CP backups, when the host CP 110 is down, all the services running in the host CP 110 will lose control. At this time, new requests will be rejected. Till the standby CP is started and the standby CP re-establishes connection with the SIU 130, the new requests are transmitted to the standby CP for processing. In a word, the new requests are rejected before the standby CP is connected, and are sent to the standby CP for processing after the connection. Therefore, the new requests will not generate phone bill loss, or cause charging error or loss to the operators. As for the services running in the host CP 110 before, one situation is that the services have been processed completely before the host CP 110 is down, in which case no charging error occurs; the other situation is that the calling user and called user are communicating with each other in PPS, in which case, if the host CP 110 is down, at the time t1 for example, the ongoing services will be lost control. When the host CP 110 is down, the host CP can not release the calls initiatively, and the SIU 130 will not release the calls either at this time. That is to say, the calls will be out of control. But when the standby CP 120 is re-connected with the SIU 130 at the time t2 for example, the SIU 130 will release all calls, re-establish new sessions, and transmit the requests to the standby CP 120 for processing. So the ending time range of the voice calling which is out of control is from t1 to t2. According to the specific circumstances of current network, the ending time of the calls can be set as t3 approximately, wherein t1≤t3≤t2.

When the CP is down, services will lose control of all talks, and neither the final phone bill recording nor charging is completed. In order to prevent the loss of the phone bill in this case, a phone bill is generated before the talk. The parameter contents of the phone bill are basically the consistent with the phone bill contents after the talk is over. The only difference is that the final ending time is the same with the talk starting time, and the values of the final ending time and the talk starting time are both talk starting time, so the talk time is zero second certainly. The phone bill is called as the zero-time phone bill before the talk. After the service talk is over, a complete phone bill of the talk this time will be generated just like the processing of common services. The phone bill correctly records the talk starting time, the talk ending time and the talk time. After being processed, each normal call will have two phone bills. One is the zero-time phone bill before the talk; the other is the complete phone bill after the talk is over. In order to distinguish the two phone bills, different service keys are used to generate the two phone bills, for example, the service key for the zero-time phone bill before the call is 801, so the zero-time phone bill is recorded as phone bill 801 before the talk; the service key of the phone bill after the talk is over normally is the service key X of the PPS, so the phone bill is recorded as X phone bill after the call.

As shown in Fig.2, the normal signal flow of PPS prepaid service after being modified is as follows.

Step S210, a user initiates a call, and a Mobile Switching Center (MSC) or a Service Switch Point (SSP) triggers PPS of a SCP according to O_CSI/T_CSI.

Step S220, PPS prepaid service flow comprises: sending CCA (Initial) to OCS, sending a calling user and a called user to the OCS for authentication, and the OCS determining corresponding fee rate, wholesale price, reserved and allocated quotas, and returning CCA (Initial).

Step S230, SCP receives authentication information returned by the OCS, considers that the call is allowed to continue, registers the event (RRBE), applies for charging (AC), and then initiates the call to the called user (CONTINUE).

Step S240, the terminal of the called user rings. And the called user answers the phone. The MSC reports ERB event to the SCP, and reports reply messages of the calling user and called user, including T_answer and O_answer. After the PPS receives the reply messages of the calling user and called user, the zero-time phone bill of the calling user and called user are generated. The service key is 801, so the phone bill is recorded as phone bill801. The starting time of the phone bill is the answering time t0, and the ending time is also the answering time t0.

Step S250, the quotas are used up, and the MSC reports ACR event and reports time length of the use.

Step S261, the SCP sends CCR (Update) message to the OCS to re-apply for quotas.

Step S262, the OCS receives CCR (Update), re-allocates quotas, and returns CCA (Update).

Step S263, the SCP issues AC, and may perform a plurality of times of CCR (Update) interactions during the talk.

Step S270, after the talk of the users is over, the MSC reports ACR and Disconnect.

Step S281, the service sends CCR (Final) to the OCS to ask for ending the talk.

Step S282, the OCS returns CCA (Final), and considers that the talk can be ended. The PPS generates complete phone bill of service key X. The talk starting time and ending time are the real talk starting time and ending time.

Step S290, the service releases the call (RC), and the normal flow is over.

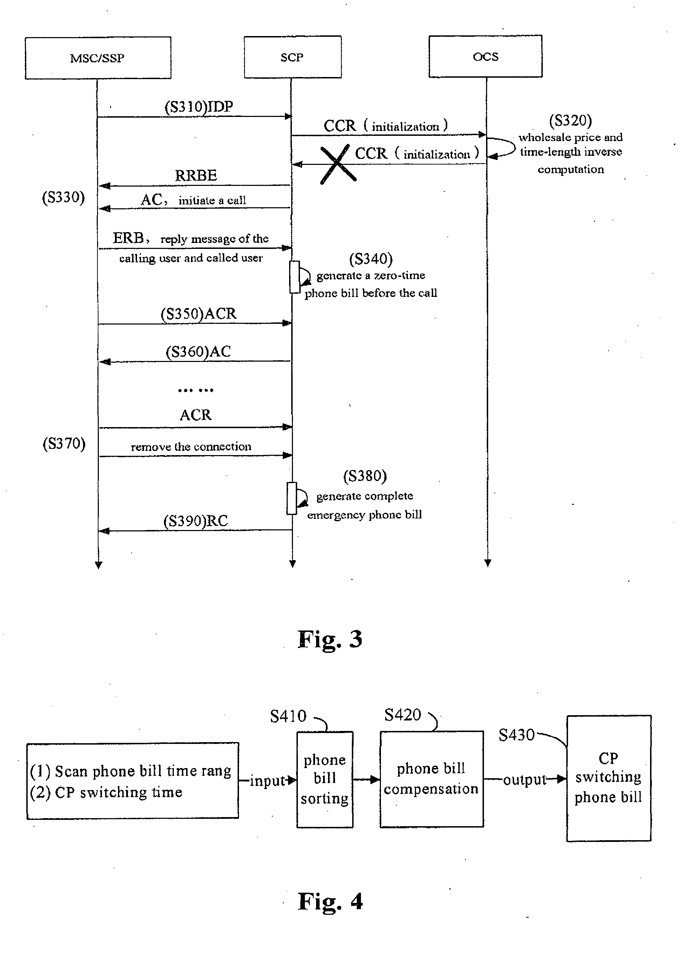

As shown in Fig.3, the signaling flow of the emergency flow when the communication between the service and the OCS is abnormal is as follows.

Step S310, a user initiates a call, and a MSC triggers PPS of a SCP according to O_CSI/T_CSI.

Step S320, PPS flow comprises: sending CCA (Initial) to OCS, sending a calling user and a called user to the OCS for authentication, and the OCS determining corresponding fee rate, wholesale price, reserved and allocated quotas.

Step S330, at this time, the communication with the OCS is abnormal. The SCP receives CCA (Initial) response overtime message. The service enters the emergency flow, and the call is performed continuously. The service controls the issuing time, registers the event (RRBE), applies for charging (AC), and then initiates the call to the called user (CONTINUE).

Step S340, the terminal of the called user rings. And the called user answers the phone. The MSC reports the ERB event to the SCP, and reports reply messages of the calling user and called user, including T_answer and O_answer. After the PPS receives the reply messages of the calling user and called user, the zero-time phone bills of the calling user and called user are generated. The service key of the phone bill is 801, so the phone bill is recorded as phone bill 801. The starting time of the phone bill is the answering time t0, and the ending time is also the answering time t0.

Step S350, the quotas are used up, and the MSC reports ACR event and reports time length of the use.

Step S360, the SCP determines the time length of each issue through the configuration, continues to issues AC, and may have a plurality of times of AC and ACR interactions according to specific circumstances.

Step S370, after the talk of the users is over, the MSC reports ACR and Disconnect.

Step S380, after receiving the final ACR, the PPS judges the talk is over, and generates an emergency phone bill of service key 901. The talk starting time and ending time are the real talk starting time and ending time.

Step S390, the service releases the call (RC), and the normal flow is over.

The modified PPS can generate three kinds of phone bills: the first one is the zero-time phone bill of service key 801 before the talk; the second one is the complete time-length phone bill of service key X of the service which is processed normally; and the third one is the complete time-length emergency phone bill of service key 901 which is generated by the emergency flow.

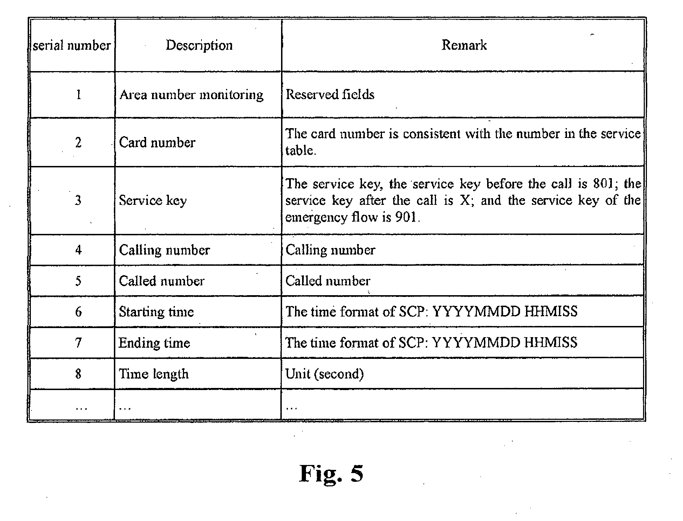

As shown in Fig.5, the contents of the three kinds of phone bills mainly comprise card numbers (namely, charging numbers), service keys, calling number, called number, talk starting time, ending time, talk time and the other parameter information of the call. The main differences of the three kinds of phone bills are as follows.

Firstly, the service keys of the three kinds of phone bills are different. Generally speaking, the name of the phone bill comprises the service key, so the three kinds of phone bills are very easy to distinguish through the name of the phone bills. Furthermore, the service key in the third item of the phone bill can also used to distinguish various phone bills.

Secondly, the main difference between the phone bill of emergency flow 901 and the phone bill of normal talk X is the different service keys. The other parameters thereof are completely the same. The OCS completes charging the call in emergency flow after the talk is over through the acquisition of phone bills 901.

Thirdly, the main differences between the phone bill 801 before the talk and the phone bill of normal talk X or phone bill 901 are the different names of the phone bills, different service keys, different talk ending time, and different talk time. The other information of the parameters is the same.

As shown in Fig.4, how to compensate the phone bill will be described in detail hereafter. Independent processing tools are needed for compensation processing of the phone bill. The input variables are as follows.
(1) The time range n of phone bill scanned, e.g. n=3 hours;
(2) The switching time t3 of the CPs, wherein t1≤t3≤t2.

The output is the compensation phone bills which are lost due to CP switching in step S430. The compensation phone bills can be stored in an independent folder for the OCS to gather, so that the users which are not charged normally can realize to be charged.

The main flow of the processing tool is divided into two parts:
Step S410, phone bill sorting is as follows. The phone bills 801, phone bills X and phone bills 901 are scanned to sort out the phone bills of service key 801which require to be processed. The scanning range of the phone bills is all the phone bills within the time from t3-n to t3, including phone bills 801, phone bills X and phone bills 901. The phone bills 801 are compared with the phone bills X or the phone bills 901. On the basis of the phone bills 801, the comparison contents comprise the three contents of calling number, called number, and starting time. If the three contents in the phone bill X or the phone bill 901 have the same contents with the phone bills 801, then a complete phone bill is considered having been generated; otherwise, the phone bill X or the phone bill 901 is considered to be lost, and the lost phone bill needs to be compensated and generated. The record of the phone bill 801 will be sorted out for further processing.

Step 410, phone bill compensation is as follows. The sorted phone bill 801 is processed. First of all, the service keys in the folder names of these phone bills are modified, so that these phone bills are modified into phone bills of special service keys (or phone bill of service key 901). The third service key in the content items of the phone bills is modified all the same. The talk ending time in the phone bills is modified into the switching time t3 of the CPs. The modification of the talk ending time can be adjusted appropriately according to specific circumstances, and the adjustment range is [t1, t3]. The talk time in the phone bill is modified as: the ending time t3-the starting time t0 of the phone bill. The compensation phone bill newly generated can be stored in a designated folder for the OCS to gather and complete charging the users which are not charged normally.

The technologies of phone bill sorting and compensation phone bill generating in above-mentioned detailed description or embodiment can adopt various existing possible solutions according to practical application. The solutions are well-known for those skilled in the art, so unnecessary description will not be given here any more.

All in all, in voice calling service, before the two calling parties communicate with each other, a zero-time phone bill before the talk is generated. After the talk is over, a complete talk time phone bill is generated. So a complete call shall generate two phone bills. When the service control processor is switched, the lost phone bill is the lost phone bill after the talk for a certainty. Thus, all phone bills within certain time period are processed after the talk is over, and the lost phone bill after the talk are compensated and generated. And then the phone bills are sent to the OCS system which completes charging the users.

The method for preventing the loss of phone bills due to the switching of the service control processor provided by the detailed description and embodiment of the present invention, adopts the measures of modifying the zero-time phone bills or the emergency phone bills which have lost the talk time phone bill, compensates the practical talk time phone bill for the OCS to gather and charge, can prevent the phone bills of ongoing talks from losing when the CPs are switched, can still provide effective guarantee for the normal charging to the user on calling under the circumstance that the CP is abnormal, prevents the charging of all ongoing calls from losing control due to the switching of the CPs, realizes the normal charging to the user, consequently reduces the loss of the operators effectively, and protects the benefit of the operators to the utmost extent.

The present invention also provides a computer readable medium according to the embodiment of the present invention. The computer readable medium is stored with computer executable instructions. When the instructions are executed by the computer or processor, the computer or processor can execute the steps as shown in Fig.2 and Fig.3. Preferably, one or a plurality of above-mentioned embodiments can be executed.

In addition, the present invention is realized without modifying the system structure or current processing flow, is easy to realize, is convenient to generalize in technical field, and has comparatively strong industrial applicability.
What should be understood is that for those skilled in the art, the method provided by the present invention can be improved or modified according to the description of above-mentioned solution. For example, the method can be used in various switching circumstances of SCP reboot, core process reboot etc. in which process abnormality occurs; the method is also suitable for the voice calling service of traditional intelligent network and the call service etc. of the intelligent network system around all countries and regions in the world.

## Claims

1. A method for preventing the loss of phone bills due to the switching of service control processors, **characterized in that** the method comprises the following steps:
A, generating a zero-time phone bill before a talk between two calling parties is initiated, and generating a talk time phone bill when a user ends the talk;
B, switching the service controllers under the circumstance that the communication is abnormal, scanning all generated phone bills, and sorting out the zero-time phone bills which have lost the talk time phone bills; and
C, modifying the sorted zero-time phone bills to compensate the talk time phone bills which generate the loss.

2. The method according to claim 1, **characterized in that** the step A specifically comprises:
A1, the generated zero-time phone bill and the talk time phone bill having the same content, while having different talk ending time, talk time and service keys; and
A2, the talk ending time and talk starting time of the zero-time phone bill being both answering time, and the talk time being zero-time.

3. The method according to claim 2, **characterized by**, also comprising the following steps after the step A2:
A3, generating an emergency phone bill which has the same content with but different service keys from the talk time phone bill under the circumstance that the communication is abnormal; and
A4, the talk starting time of the emergency phone bill being practical talk starting time, and the talk ending time of the emergency phone bill being practical talk ending time.

4. The method according to claim 3, **characterized in that** the step B also comprises:
controlling switching time of the service controllers within an error range of the talk ending time which is out of control, and controlling scanning time for scanning the phone bills before sorting within a setting time range.

5. The method according to claim 4, **characterized in that** the step B specifically comprises:
B11, comparing the scanned talk time phone bills with the zero-time phone bill, which is used as the basis for the comparison, generated before the talk; and
B 12, judging whether the contents of calling number, called number and the starting time are respectively the same or not; wherein if same, a complete phone bill is considered to have been generated; otherwise, the talk time phone bill corresponding to the zero-time phone bill is considered to have been lost.

6. The method according to claim 5, **characterized in that** the step C specifically comprises:
C11, modifying the service key in file name of the zero-time phone bill into service key in a phone bill of a special service key;
C12, modifying the service key in content items of the zero-time phone bill into the special service key; and
C13, modifying the ending time of the zero-time phone bill into the switching time of the service controllers, and modifying the talk time of the zero-time phone bill correspondingly.

7. The method according to claim 4, **characterized in that** the step B specifically comprises:
B21, comparing the scanned emergency phone bills with the zero-time phone bill, which is used as the basis for the comparison, generated before the talk;
B22, judging whether the three contents of calling number, called number and the starting time are respectively the same or not; wherein if same, a complete phone bill is considered to have been generated;
B22, judging whether the three contents of calling number, called number and the starting time are respectively the same or not; wherein if same, a complete phone bill is considered to have been generated; otherwise, the emergency phone bill corresponding to the zero-time phone bill is considered to have been lost; and
B23, sorting out the zero-time phone bills which have lost the emergency phone bill.

8. The method according to claim 7, **characterized in that** the step C also comprises:
modifying the sorted zero-time phone bills to compensate the emergency phone bills which generate the loss.

9. The method according to claim 8, **characterized in that** the step C comprises:
C21, modifying the service key in file name of the zero-time phone bill into the service key in the emergency phone bill;
C22, modifying the service key in content items of the zero-time phone bill into an service key of the emergency phone bill; and
C23, modifying the ending time of the zero-time phone bill into the switching time of the service control processors, and modifying the talk time of the zero-time phone bill correspondingly.

10. The method according to claim 6 or 9, **characterized by**, also comprising the following steps after the step C:
D1, storing the modified zero-time phone bills in a designated folder as compensation phone bills; and
D2, providing the compensation phone bills to an online counter system for gathering and completing charging to the user.

## Patentansprüche

1. Verfahren zur Verhinderung des Verlustes von Anrufabrechnungen infolge des Schaltens von Service-Steuerungsprozessen, **dadurch gekennzeichnet, daß** das Verfahren die folgenden Schritte aufweist:
A. Erstellen einer Null-Zeit-Anrufabrechnung, bevor ein Gespräch zwischen zwei Gesprächsparteien eingeleitet wird, und Erstellen einer Gesprächszeit-Anrufabrechnung, sobald ein Benutzer das Gespräch beendet;
B. Schalten des Service-Steuerers für den Fall, daß die Kommunikation nicht normal ist, Scannen aller erzeugter Anrufrechnungen und Aussortieren der Null-Zeit-Anrufabrechnungen, die die Gesprächszeit-Anrufabrechnungen verloren haben; und
C. Modifizieren der aussortierten Null-Zeit-Anrufabrechnungen zwecks Kompensation der Gesprächszeit-Anrufabrechnungen, die den Verlust erzeugen.

2. Verfahren nach Anspruch 1, **dadurch gekennzeichnet, daß** der Schritt A insbesondere umfaßt:
A1. Die erstellte Null-Zeit-Anrufabrechnung und die Gesprächszeit-Anrufabrechnung haben denselben Inhalt, während sie unterschiedliche Gesprächsendzeiten, Gesprächszeiten und Service-Schlüssel aufweisen;
A2 Die Gesprächsendzeit und die Gesprächsstartzeit der Null-Zeit-Anrufrechnung sind beide Antwortzeiten, während die Gesprächszeit Null-Zeit ist.

3. Verfahren nach Anspruch 2, **dadurch gekennzeichnet, daß** nach dem Schritt A2 auch die folgenden Schritte vorhanden sind:
A3. Erstellen einer Notfall-Anrufrechnung von der Gesprächszeit-Anrufrechnung, die denselben Inhalt hat, jedoch mit verschiedenen Service-Schlüsseln, und zwar dann, wenn die Kommunikation anormal ist, und
A4. Die Gesprächsstartzeit der Notfall-Anrufrechnung ist die praktische die Gesprächsstartzeit, und die Gesprächsendzeit der Notfall-Anrufrechnung ist die praktische Gesprächsendzeit.

4. Verfahren nach Anspruch 3, **dadurch gekennzeichnet, daß** der Schritt B auch beinhaltet das Steuern der Schaltzeit der Service-Steuerer in einem Fehlerbereich der Gesprächsendzeit, in dem keine Steuerung stattfindet, sowie das Steuern der Scanzeit zum Scannen der Anrufrechnungen vor dem Aussortieren innerhalb eines gesetzten Zeitbereiches.

5. Verfahren nach Anspruch 4, **dadurch gekennzeichnet, daß** der Schritt B insbesondere umfaßt:
B11. Vergleichen der gescannten Gesprächszeit-Anrufrechnungen in der Null-Zeit-Anrufrechnung, die als Grundlage für den Vergleich verwendet wird, und zwar erstellt vor dem Gespräch und
B12. Beurteilen, ob die Inhalte der angerufenen Nummer entsprechend dieselben oder nicht dieselben sind, wobei wenn sie dieselben sind, eine vollständige Anrufrechnung als erstellt worden betracht wird; sonst wird die Gesprächszeit-Anrufrechnung, die der Null-Zeit-Anrufrechnung entspricht, als verlorengegangen betrachtet.

6. Verfahren nach Anspruch 5, **dadurch gekennzeichnet, daß** der Schritt C insbesondere aufweist:
C11. Modifizieren des Service-Schlüssels in Dateinamen der Null-Zeit-Anrufabrechnung in den Service-Schlüssel in einer Anrufabrechnung eines speziellen Service-Schlüssels;
C12. Modifizieren des Service-Schlüssels in Inhaltselementen der Null-Zeit-Anrufabrechnung in dem speziellen Service-Schlüssel; und
C13. Modifizieren der Beendigungszeit der Null-Zeit-Anrufabrechnung in die Schaltzeit der Service-Steuerer sowie entsprechendes Modifizieren der Gesprächszeit der Null-Zeit-Anrufabrechnung.

7. Verfahren nach Anspruch 4, **dadurch gekennzeichnet, daß** der Schritt B insbesondere umfaßt:
B21. Vergleichen der gescannten Notfall-Anrufrechnungen mit der Null-Zeit-Anrufrechnung, die als Grundlage für den Vergleich benutzt wird und vor dem Gespräch erstellt wird;
B22. Beurteilen, ob die drei Inhalte der Rufnummer, angerufenen Nummer und der Startzeit entsprechend dieselben sind oder nicht, wobei dann, wenn sie dieselben sind, eine vollständige Anrufabrechnung als erstellt worden angesehen wird;
B22. Beurteilen, ob die drei Inhalte der Rufnummer, angerufenen Nummer und der Startzeit entsprechend dieselben sind oder nicht, wobei dann, wenn sie dieselben sind, eine vollständige Anrufabrechnung als erstellt angesehen wird, anderenfalls wird die Notfall-Anrufrechnung, die der Null-Zeit-Anrufrechnung entspricht, als in Verlust gegangen betrachtet; und
B23. Aussortieren der Null-Zeit-Anrufrechnungen, bei denen die Notfall-Anrufrechnung verloren ist.

8. Verfahren nach Anspruch 7, **dadurch gekennzeichnet, daß** der Schritt C auch folgendes umfaßt: Modifizieren der sortierten Null-Zeit-Anrufrechnungen zur Kompensation der Notfall-Anrufrechnungen, die zu dem Verlust geführt haben.

9. Verfahren nach Anspruch 8, **dadurch gekennzeichnet, daß** der Schritt C umfaßt:
C21. Modifizieren des Service-Schlüssels im Dateinamen der Null-Zeit-Anrufabrechnung in den Service-Schlüssel in der Notfall-Anrufabrechnung;
C22. Modifizieren des Service-Schlüssels in den Inhaltelementen der Null-Zeit-Anrufrechnung in einen Service-Schlüssel der Notfall-Anrufabrechnung; und
C23. Modifizieren der Endzeit der Null-Zeit-Anrufrechnung in die Schaltzeit der Service-Steuerprozessoren und Modifizieren der Gesprächszeit der Null-Zeit-Anrufrechnung entsprechend.

10. Verfahren nach Anspruch 6 oder 9, **dadurch gekennzeichnet, daß** es auch die folgenden Schritte nach dem Schritt C umfaßt:
D1. Speichern der modifizierten Null-Zeit-Anrufrechnungen in einem dafür vorgesehenen Ordner als Kompensations-Anrufabrechnungen; und
D2. Erstellen der Kompensations-Anrufabrechnungen für ein Online-Zählsystem, um dadurch für den Benutzer Zahlungsbeträge zu sammeln und zu vervollständigen.

## Revendications

1. Procédé pour empêcher la perte de factures de téléphone en raison de la commutation de processeurs de contrôle de service, **caractérisé en ce que** le procédé comprend les étapes suivantes :
A, générer une facture de téléphone de temps zéro avant qu'une conversation entre deux parties appelantes ne soit initiée, et la génération d'une facture de téléphone de temps de conversation lorsqu'un utilisateur met fin à la conversation ;
B, commuter les contrôleurs de service dans le cas où la communication est anormale, le scannage de toutes les factures de téléphone générées, et le tri des factures de téléphone de temps zéro qui ont perdu les factures de téléphone de temps de conversation ; et
C, modifier les factures de téléphone de temps zéro triées pour compenser les factures de téléphone de temps de conversation qui génèrent la perte.

2. Procédé selon la revendication 1, **caractérisé en ce que** l'étape A comprend spécifiquement :
A1, la facture de téléphone de temps zéro générée et la facture de téléphone de temps de conversation ayant le même contenu, tout en ayant un temps de fin de conversation, un temps de conversation et des clés de service différents ; et
A2, le temps de fin de conversation et le temps de début de conversation de la facture de téléphone de temps zéro étant tous deux le temps de réponse, et le temps de conversation étant le temps zéro.

3. Procédé selon la revendication 2, **caractérisé en ce qu'**il comprend également les étapes suivantes après l'étape A2 :
A3, générer une facture de téléphone d'urgence qui a le même contenu mais avec des clés de service différentes de la facture de téléphone de temps de conversation dans le cas où la communication est anormale ; et
A4, le temps de début de conversation de la facture de téléphone d'urgence étant le temps de début de conversation pratique, et le temps de fin de conversation de la facture de téléphone d'urgence étant le temps de fin de conversation pratique.

4. Procédé selon la revendication 3, **caractérisé en ce que** l'étape B comprend également :
contrôler le temps de commutation des contrôleurs de service à l'intérieur d'une plage d'erreur du temps de fin de conversation qui est hors contrôle, et le contrôle du temps de scannage pour scanner les factures de téléphone avant le tri à l'intérieur d'une plage de temps de réglage.

5. Procédé selon la revendication 4, **caractérisé en ce que** l'étape B comprend spécifiquement :
B11, comparer les factures de téléphone de temps de conversation scannées avec la facture de téléphone de temps zéro, qui est utilisée comme base pour la comparaison, générée avant la conversation ; et
B12, le jugement de si les contenus du numéro appelant, du numéro appelé et du temps de début sont respectivement les mêmes ou non ; où si ce sont les mêmes, une facture de téléphone complète est considérée comme ayant été générée ; autrement, la facture de téléphone de temps de conversation correspondant à la facture de téléphone de temps zéro est considérée comme ayant été perdue.

6. Procédé selon la revendication 5, **caractérisé en ce que** l'étape C comprend spécifiquement :
C11, modifier la clé de service dans un nom de fichier de la facture de téléphone de temps zéro en clé de service dans une facture de téléphone d'une clé de service spéciale ;
C12, modifier la clé de service dans des items de contenu de la facture de téléphone temps zéro en la clé de service spéciale ; et
C13, modifier du temps de fin de la facture de téléphone de temps zéro en le temps de commutation des contrôleurs de service, et la modification du temps de conversation de la facture de téléphone de temps zéro de manière correspondante.

7. Procédé selon la revendication 4, **caractérisé en ce que** l'étape B comprend spécifiquement :
B21, comparer les factures de téléphone d'urgence scannées avec la facture de téléphone de temps zéro, qui est utilisée comme base pour la comparaison, générée avant la conversation ;
B22, juger si les trois contenus du numéro appelant, du numéro appelé et du temps de début sont respectivement les mêmes ou non ; où si ce sont les mêmes, une facture de téléphone complète est considérée comme ayant été générée ; autrement, la facture de téléphone d'urgence correspondant à la facture de téléphone de temps zéro est considérée comme ayant été perdue ; et
B23, trier les factures de téléphone de temps zéro qui ont perdu la facture de téléphone d'urgence.

8. Procédé selon la revendication 7, **caractérisé en ce que** l'étape C comprend également :
modifier les factures de téléphone de temps zéro triées pour compenser les factures de téléphone d'urgence qui génèrent la perte.

9. Procédé selon la revendication 8, **caractérisé en ce que** l'étape C comprend :
C21, modifier la clé de service dans un nom de fichier de la facture de téléphone de temps zéro en la clé de service dans la facture de téléphone d'urgence ;
C22, modifier la clé de service dans des items de contenu de la facture de téléphone de temps zéro en une clé de service de la facture de téléphone d'urgence ; et
C23, modifier le temps de fin de la facture de téléphone de temps zéro en le temps de commutation des processeurs de contrôle de service, et la modification du temps de conversation de la facture de téléphone de temps zéro de manière correspondante.

10. Procédé selon la revendication 6 ou 9, **caractérisé en ce qu'**il comprend également les étapes suivantes après l'étape C :
D1, stocker les factures de téléphone de temps zéro modifiées dans un dossier désigné comme des factures de téléphone de compensation ; et
D2, fournir les factures de téléphone de compensation à un système de compteur en ligne pour la collecte et l'achèvement de taxation à l'utilisateur.
